# EUROPÄISCHE PATENTANMELDUNG

(11) **EP 1 677 025 A1**
(43) Veröffentlichungstag der Anmeldung: **05.07.2006**
(21) Anmeldenummer: 05028017.1
(22) Anmeldetag: 21.12.2005
(51) Int. Cl.: F16F 1/38, F16F 1/393, B60G 9/02

(54) **Elastomer-Metall-Gelenklager, insbesondere als Zentralgelenk an einem Dreieckslenker einer Achslagerung**

(30) Priorität: 04.01.2005 DE 102005000759
(71) Anmelder: Jörn GmbH, 71336 Waiblingen (DE)
(72) Erfinder: Zawadzki, Bernd, 71409 Schwaikheim (DE); Seck, Gerhard, 73630 Remshalden (DE); Krauter, Thomas, 71540 Murrhardt (DE)
(74) Vertreter: Neubauer, Hans-Jürgen

(57) **Zusammenfassung**

Elastomer-Metall-Gelenklager, insbesondere als Zentralgelenk an einem Dreieckslenker einer Achslagerung, mit einem metallischen Aufnahmeauge (5), mit einem balligen Lagerinnenteil (7) und mit einem vorgespannten Elastomerkörper (27) zwischen dem Lagerinnenteil (7) und dem Aufnahmeauge (5), wobei der Elastomerkörper (27) mehrteilig ausgebildet ist und den balligen Bereich (25) des Lagerinnenteils (7) übergreift. Erfindungsgemäß ist das Aufnahmeauge (5) in einer Axialebene in zwei Aufnahmeschalenteile (20, 21) längsgeteilt, dergestalt, dass ein Aufnahmeschalenteil als Basisschalenteil (20) mit der ersten Lagerstelle (3a, 3b) unmittelbar oder mittelbar verbunden ist und das andere Aufnahmeschalenteil als abnehmbare Deckelschale (21) über Spannschrauben (38a, 38b, 39a, 39b) mit der Basisschale (20) unter Aufbringung der Vorspannung im Elastomerkörper (27) verbunden ist. Die Aufnahmeschalenteile (20, 21) weisen im geschlossenen Zustand etwa eine Innenkontur entsprechend einer Negativform der Form (24) des Lagerinnenteils (7) auf, wobei zwischen den Aufnahmeschalenteilen (20, 21) und dem Lagerinnenteil (7) ein Aufnahmespaltraum für den mehrteiligen, vorgespannten Elastomerkörper (27) ausgebildet ist. Bei einer solchen Gelenklagerausbildung stehen erweiterte Montage- und Anschlussmöglichkeiten zur Verfügung.

## Beschreibung

Die Erfindung betrifft ein Elastomer-Metall-Gelenklager, insbesondere als Zentralgelenk an einem Dreieckslenker einer Achslagerung nach dem Oberbegriff des Anspruchs 1.

Ein bekanntes, gattungsgemäßes Elastomer-Metall-Gelenklager (DE 196 27 753 C2) zur Lagerung von Achslenkern besteht aus einem metallischen Aufnahmeauge als erstem Lagerteil und aus einem Lagerinnenteil als zweitem Lagerteil, das in das Aufnahmeauge eingesetzt ist und das im Bereich des Aufnahmeauges um eine Lagerachse rotationssymmetrisch ballig ausgebildet ist. Ein Elastomerkörper ist vorgespannt zwischen dem Lagerinnenteil und dem Aufnahmeauge eingesetzt. Der Elastomerkörper ist mehrteilig ausgebildet und übergreift den balligen Bereich des Lagerinnenteils.

Das Lagerinnenteil ist hier in Richtung der Rotationsachse mit zwei gegenüberliegenden Anschlusspratzen aus dem Aufnahmeauge herausgeführt, wobei diese beiden Anschlusspratzen mit standardisierten kurzen Abmessungen für den Anschluss an individuell an Fahrzeugaufbauten oder Achskörpern für Anpass- oder Überbrückungszwecke angeordneten Aufbauteilen vorgesehen sind. Zudem weist hier das Lagerinnenteil eine Doppelkonusform auf und das Aufnahmeauge hat einen zylindrischen Innenraum. Ein Elastomerkörper zwischen dem Lagerinnenteil und dem Aufnahmeauge ist in einer mittigen Radialebene in zwei Elastomer-Metall-Halbschalen als Schalenringe geteilt, welche jeweils axial auf das Lagerinnenteil über die Anschlusspratzen aufgesteckt sind und den balligen Bereich des Lagerinnenteils von beiden Seiten her übergreifen. Diese Schalenringe sind zwischen beidseitigen Stützringen axial vorgespannt und mittels Federringen gehalten.

Die hohe axiale Vorspannkraft auf die Schalenringe in einem rundum geschlossenen, einstückigen Aufnahmeauge und deren Halterung wird in einem Vormontageschritt mit einem speziellen Pressenwerkzeug vorgenommen, so dass Achslenker mit solchen Gelenklagern entsprechend vormontiert für eine Endmontage am Fahrzeug angeliefert werden. Je nach den Gegebenheiten könnte es aber auch zweckmäßig sein, ein solches Gelenklager, insbesondere ein Zentrallager am Dreieckslenker einer Achslagerung unter Aufbringung der Vorspannung erst während der Endmontage vor Ort zu montieren, was jedoch bei diesem Gelenklager nicht möglich ist. Zudem werden hier die Schalenringe axial über die Anschlusspratzen auf das ballige Lagerinnenteil aufgesteckt, was bei den axial ausgerichteten kurzen Pratzenstummeln einfach möglich ist. Wenn diese Anschlusspratzen abgewinkelt und gegebenenfalls verlängert wären, ist es nicht oder nur schwierig möglich, solche Schalenringe für ein axiales Zusammenspannen auf das Lagerinnenteil aufzustecken.

Weiter ist eine Achslagerung mit einem Dreieckslenker bekannt (DE 100 32 961 A1), bei der ein Zentralgelenk am Dreieckslenker als auch die beiden anderen Gelenke als Kugelgelenke mit je einem balligen Lagerinnenteil und jeweils zwei aus dem Aufnahmeauge gegenüberliegend abstehenden Anschlusspratzen ausgebildet sind. Die Anschlusspratzen sind auch hier kurze, jeweils gleiche Pratzenstummel mit Anschlussbohrungen. In üblicher Weise erfolgt hier der Anschluss des Zentralgelenks an der Oberseite eines Achskörpers über einen dort angebrachten Lagerbock, mit dem die Anschlusspratzen des Zentralgelenks verbunden sind. Diese Anschlusstechnik ist durch den erforderlichen Lagerbock als Adapterteil aufwendig und führt zu einer großen Aufbauhöhe. Auch für die beiden anderen Gelenke des Dreieckslenkers sind für die Verbindung der Pratzenstummel individuelle Stützkonstruktionen an den Längsträgern des Fahrzeugaufbaus vorgesehen, um eine kraftübertragende Anbindung zu ermöglichen. Auch diese Anschlusskonstruktionen sind bei relativ großem Raumbedarf aufwendig.

Anstelle des vorstehenden Anschlusses eines Lagerinnenteils über zwei Pratzenstummel ist es allgemein bekannt, ein Lagerinnenteil mit einer durchgehenden Bohrung zur Aufnahme einer Anschlussschraube vorzusehen. Weiter ist eine Anschlusstechnik eines Lagerinnenteils mittels eines einseitig abragenden Konuszapfens allgemein bekannt. Allen vorstehenden Anschlusstechniken ist gemein, dass die Anschlussteile, wie Anschlusspratzen oder Konuszapfen an handelsüblichen Lenkern, insbesondere an Dreieckslenkern, weitgehend standardisiert sind. Die Anpassung für einen Anschluss am Fahrzeugaufbau erfolgt regelmäßig durch Adapterteile oder zusätzlich speziell für den Anschlusszweck angebrachte Böcke, Lagerplatten, etc. Dies führt regelmäßig zu kostenintensiven Anschlusslösungen hinsichtlich der Aufbaukosten, Montagekosten und der Teilevielfalt.

Aufgabe der Erfindung ist es, ein gattungsgemäßes Elastomer-Metall-Gelenklager so weiterzubilden, dass bei guter Lagerfunktion und einfachem Aufbau erweiterte Montage- und Anschlussmöglichkeiten zur Verfügung stehen.

Diese Aufgabe wird mit den Merkmalen des Anspruchs 1 gelöst.

Gemäß Anspruch 1 ist das Aufnahmeauge in einer Axialebene in zwei Aufnahmeschalenteile längsgeteilt, dergestalt, dass ein Aufnahmeschalenteil als Basisschalenteil mit der ersten Lagerstelle unmittelbar oder mittelbar verbunden ist und das andere Aufnahmeschalenteil als abnehmbare Deckelschale über Spannschrauben mit der Basisschale unter Aufbringung der Vorspannung im Elastomerkörper verbunden ist. Die Aufnahmeschalenteile weisen im geschlossenen Zustand etwa eine Innenkontur entsprechend einer Negativform der Form des Lagerinnenteils auf, wobei zwischen den Aufnahmeschalenteilen und dem Lagerinnenteil ein Aufnahmespaltraum für den mehrteiligen, vorgespannten Elastomerkörper ausgebildet ist.

Bei einer solchen Ausbildung eines Elastomer-Metall-Gelenklagers wird eine Art Kugelgelenkfunktion geschaffen, mit einfach und kostengünstig herstellbaren Elastomerkörperteilen bei einfacher Montage gegebenenfalls in Verbindung mit einer Endmontage am Fahrzeug mittels Spannschrauben. Da die Elastomerkörperteile hierbei nicht mehr als Ringschalen über Anschlusspratzen zu stecken sind, können Anschlusspratzen für einfache, kostengünstige, direkte Anschlüsse in ihrer Formgebung stark variiert werden.

Gemäß Anspruch 2 soll die Spaltbreite des Aufnahmespalts an allen Stellen etwa gleich sein. Der Elastomerkörper ist aus Elastomer-Metall-Körperschalenteilen mit etwa gleicher Wandstärke zusammengesetzt. Diese Wände bestehen aus einer zwischen Blechschalenteilen einvulkanisierten Elastomerschicht, wobei auch hier die Wandstärke im nicht vorgespannten Herstellzustand größer als die Spaltbreite des Aufnahmespaltraums ist. Die Elastomer-Metall-Körperschalenteile sind dabei entsprechend der Form des Aufnahmespaltraums vorgeformt. Die Blechschalenteile dienen der Vergleichmäßigung der Elastomervorspannung in den Wänden. Vorzugsweise sind diese Blechschalenteile aus Metall hergestellt. Grundsätzlich können sie jedoch auch aus Kunststoffmaterial hergestellt werden, was hier ebenfalls mit umfasst sein soll.

Zur Erhöhung der Reibung gegen eine Relativverdrehung kann bei Bedarf nach Anspruch 3 auf den Blechschalenteilen nach außen, insbesondere auf den lagerinneren Blechschalenteilen, ein Elastomerfilm angebracht werden.

Nach Anspruch 4 kann der mehrteilige Elastomerkörper grundsätzlich radial oder axial geteilt sein, wobei für eine einfache Montage eine axiale Teilung zu bevorzugen ist. Zudem kann je nach den Gegebenheiten eine radiale und axiale Teilung in mehr als zwei Elastomerkörperteile zweckmäßig sein.

In einer konkreten Ausführungsform nach Anspruch 5 ist der Elastomerkörper vorzugsweise als Gummi-Metallkörper mit lagerinneren und lageräußeren Blechschalenteilen und dazwischen einvulkanisierter Elastomerschicht insgesamt axial in zwei Elastomerkörper-Schalenteile geteilt. Im vorgespannten Zustand nach der Montage der Deckelschale ist dann im wesentlichen eine radiale Vorspannung in der Elastomerschicht aufgebracht.

In einer alternativen Ausführungsform nach Anspruch 6 ist auch hier der Elastomerkörper entsprechend in zwei Elastomerkörper-Schalenteile geteilt, wobei die Gummischicht jedes Elastomerkörper-Schalenteils und das lageräußere Blechschalenteil im nicht vorgespannten Zustand jeweils durch einen radialen mittleren Spalt voneinander beabstandet sind. Im vorgespannten Zustand ist dann wenigstens der Spalt in der Gummischicht durch eine aufgebrachte radiale und axiale Vorspannung geschlossen.

In einer weiteren alternativen Ausführungsform nach Anspruch 7 ist der Elastomerkörper mit lagerinneren und lageräußeren Blechschalenteilen insgesamt axial und radial in vier Elastomerkörper-Schalenteile geteilt, die im montierten und vorgespannten Zustand durch eine aufgebrachte radiale und axiale Vorspannung mit ihren benachbarten Rändern weitgehend zusammengeführt sind.

Grundsätzlich kann die ballige Ausbildung am Lagerinnenteil je nach den erforderlichen Gegebenheiten dimensioniert werden, insbesondere gemäß Anspruch 8 kugelartig ausgeführt sein. Nach Anspruch 9 kann bei entsprechenden Anforderungen an die Lagerstelle der ballige Bereich des Lagerinnenteils auch durch eine mittlere Zylinderform gebildet sein, die sich nach beiden Seiten zu seitlichen Zylinderformen verjüngt und damit eine Doppelkonusform bildet. Der Elastomerkörper bzw. dessen Teile umfassen dabei die Doppelkonusform und jeweils einen Teil der seitlichen Zylinderformen.

Durch die vorstehenden Alternativen werden je nach den Gegebenheiten und Erfordernissen geeignete Lagerauslegungen und Dimensionierungen in weiten Grenzen möglich.

Für eine stabile, raumsparende Konstruktion des geteilten Aufnahmeauges wird mit Anspruch 10 vorgeschlagen, dass die Schalenteile dickwandig und in der Außenform als Halbkreis-Halbschalen ausgebildet sind und formschlüssig an entsprechend strukturierten Anlageflächen aneinander liegen. Die Spannschrauben, vorzugsweise vier gegeneinander versetzte Spannschrauben, sind dabei etwa senkrecht durch die Anlagefläche geführt, wobei geeignete Abstützflächen für die Schraubenköpfe und gegebenenfalls Schraubenmuttern vorzusehen sind. Vorzugsweise werden jedoch unmittelbar an den Anlageflächen der Achslenkerschale Gewindebohrungen eingebracht, so dass keine zusätzlichen Schraubenmuttern erforderlich sind. Ein hinsichtlich seiner Festigkeit und seines Gewichts besonders bevorzugter Lenker, insbesondere ein Dreieckslenker, wird aus Aluminium als Schmiedeteil hergestellt. Ein solcher Dreieckslenker ist dabei im Bereich des Zentralgelenk-Aufnahmeauges verstärkt auszuführen.

Nach Anspruch 11 sind auch beim vorliegenden Gelenklager an sich bekannte Anschlüsse des Innenteils mittels Konuszapfen, Anschlusspratzen oder zentraler Bohrung mit durchgesteckter Anschlussschraube möglich.

Bei einer besonders bevorzugten Ausführungsform nach Anspruch 12 wird vorgeschlagen, dass die wenigstens eine Anschlusspratze aus einem aus dem Aufnahmeauge vorstehenden Pratzenzapfen und wenigstens einer daran anschließenden und Bohrungen für Anschlussschrauben enthaltenden Pratzenverlängerung besteht, welche zu Anpasszwecken gegenüber der Pratzenzapfenrichtung abgewinkelt und/oder verdreht und/oder gebogen ist. Besonders günstig ist hier nach Anspruch 13, wenn eine solche Pratzenverlängerung mit etwa einem Rechteckquerschnitt für eine flächige Anlage an der zugeordneten Lagerstelle ausgebildet ist. Eine oder mehrere Pratzenverlängerungen an einem Pratzenzapfen können dabei U-Formen, T-Formen oder Kurbel-Formen bilden, wobei diese Formen an einer oder beiden Seiten des Aufnahmeauges realisierbar sind, ohne dass damit die Lagermontage behindert ist. Ersichtlich sind bei diesen Gestaltungsmöglichkeiten direkte Anbindungen und Anpassungen eines Lagerinnenteils mit Anschlusspratzen bei unterschiedlichen Gegebenheiten möglich, indem die erforderliche Anpassung und Individualisierung an die jeweils konkreten Anschlussgegebenheiten von vorneherein in der Geometrie der Anschlusspratzen in Verbindung mit dem Lagerinnenaufbau in nur einem einzigen Bauteil berücksichtigt ist. Damit können Kosten am Aufbau sowie gegebenenfalls separat erforderliche Adapterteile, wie Lagerböcke, etc., und eine hohe Teilevielfalt mit der dazu erforderlichen Logistik eingespart werden. Zudem können Montagekosten reduziert werden.

In einer besonders bevorzugten Ausführungsform nach Anspruch 14 ist das Lagerinnenteil insgesamt U-förmig ausgebildet, wobei die Pratzenverlängerungen die U-Schenkel bilden und jeweils zwei untereinander beabstandete und gegenüber dem Aufnahmeauge versetzt liegende Bohrungen für Anschlussschrauben aufweisen. Damit kann das Platz beanspruchende Aufnahmeauge vorteilhaft neben und versetzt zu einer Anschlussstelle angebracht werden, wobei die U-Schenkel zur Abstandsüberbrückung dienen. Besonders vorteilhaft kann nach Anspruch 15 damit ein Zentralgelenk eines Dreieckslenkers stabil seitlich eines Achskörpers mit vorzugsweise horizontal oder vertikal gerichteten Pratzenverlängerungen angeordnet werden. Ein sonst üblicher Lagerbock fällt weg und die Aufbauhöhe kann reduziert werden, wodurch sich zudem konstruktive Freiräume ergeben.

Anhand einer Zeichnung wird die Erfindung näher erläutert.

Es zeigen:
- Fig. 1: eine erste Ausführungsform eines Dreieckslenkers,
- Fig. 2: eine erste Anschlussmöglichkeit des Dreieckslenkers nach Fig. 1 an einem Achskörper,
- Fig. 3: eine alternative Anschlussmöglichkeit,
- Fig. 4: eine Seitenansicht eines montierten Lagers,
- Fig. 5: ein Schnitt durch das Lager nach Fig. 4 entlang der Linie A-A mit einer ersten Innenausbildung,
- Fig. 6: einen Schnitt entsprechend Fig. 4 mit einer zweiten Innenausbildung, und
- Fig. 7: einen Schnitt entsprechend Fig. 4 mit einer dritten Innenausbildung.

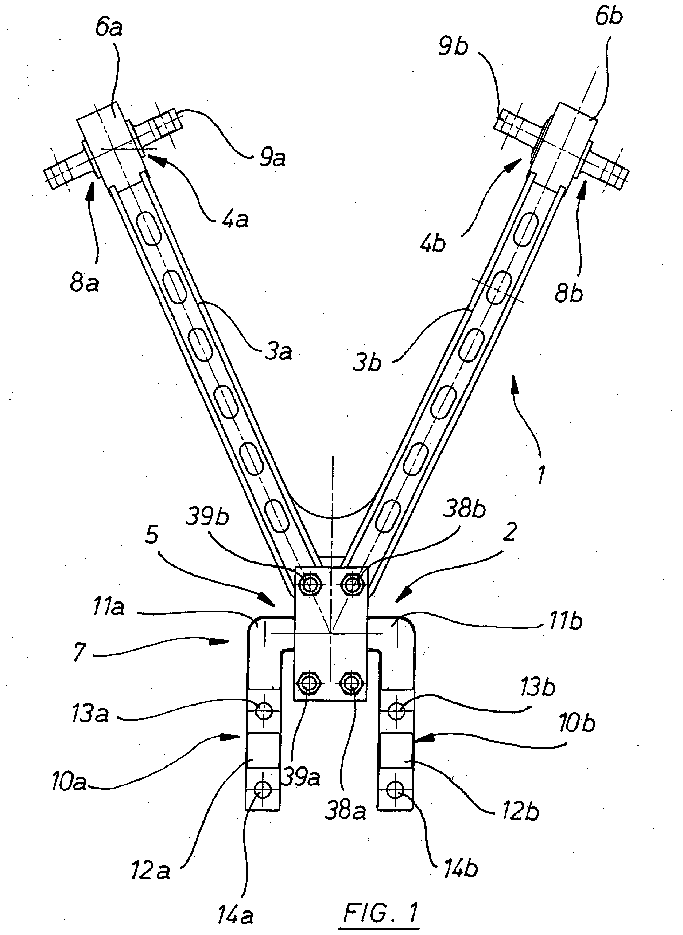

In Fig. 1 ist ein Dreieckslenker 1 dargestellt mit einem Zentralgelenklager 2 und davon ausgehenden Lenkerschenkeln 3a, 3b mit jeweils endseitigen Gelenklagern 4a und 4b. Der Dreieckslenker 1 ist aus Aluminium als Schmiedeteil hergestellt.

Das Zentralgelenklager 2 sowie die endseitigen Gelenklager 4a, 4b sind jeweils aus einem Aufnahmeauge 5 sowie 6a und 6b einem Lagerinnenteil 7 sowie 8a und 8b und einem weiter unten erläuterten Elastomerkörper zwischen Aufnahmeauge und Lagerinnenteil gebildet.

Bei den endseitigen Gelenklagern 4a, 4b ragt jeweils das Lagerinnenteil 8a, 8b mit Anschlusspratzen 9a, 9b axial aus dem Aufnahmeauge 6a bzw. 6b beidseitig heraus. Die Anschlusspratzen 9a, 9b sind relativ kurz und jeweils mit einer Schraubenbohrung versehen für eine übliche bekannte Anschlusstechnik. Ersichtlich sind hier beim Einsatz des Dreieckslenkers 1 als Achslenker für den Anschluss der Anschlusspratzen 9a, 9b an Längsträgern des Fahrzeugaufbaus dort angepasste Lagerböcke vorzusehen.

In Verbindung mit dem Zentralgelenklager 2 ist dagegen die erfindungsgemäße Anschlusstechnik gezeigt: auch hier steht das Lagerinnenteil 7 beidseitig mit Anschlusspratzen 10a, 10b aus dem Aufnahmeauge 5 vor. Diese Anschlusspratzen 10a, 10b bestehen jedoch hier jeweils aus einem aus dem Aufnahmeauge 5 axial abstehenden Pratzenzapfen 10a, 10b, an den sich jeweils eine Pratzenverlängerung 12a, 12b anschließt. Die beiden Pratzenverlängerungen 12a, 12b bilden U-Schenkel eines insgesamt U-förmigen Lagerinnenteils und weisen jeweils beabstandete Schraubenbohrungen 13a, 13b und 14a, 14b auf. Wie aus der Draufsicht nach Fig. 1 ersichtlich, sind die Pratzenverlängerungen 12a, 12b so lange gewählt, dass die Schraubenbohrungen 13a, 13b und 14a, 14b versetzt gegenüber dem Bereich des Aufnahmeauges 5 liegen.

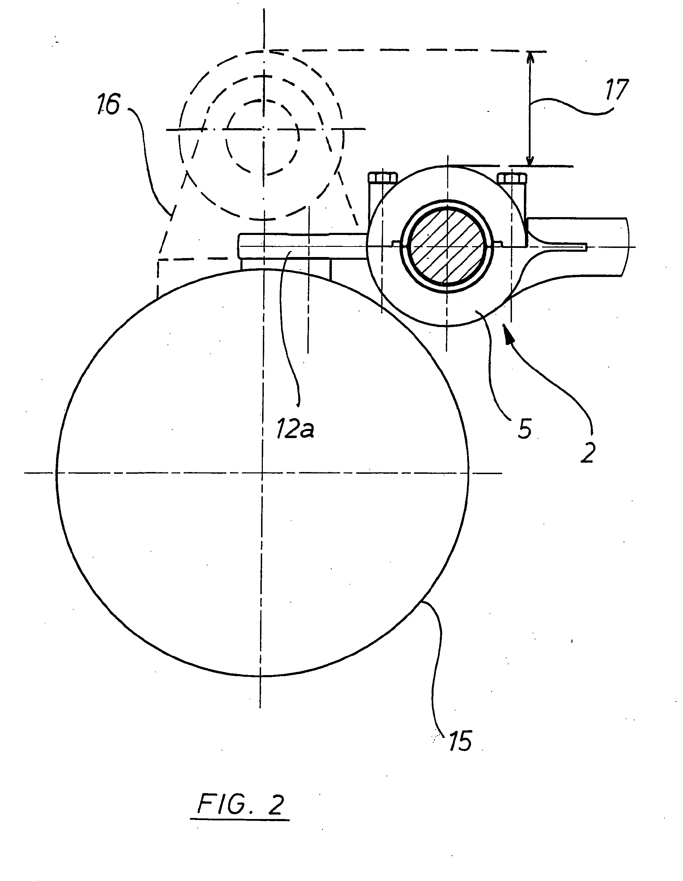

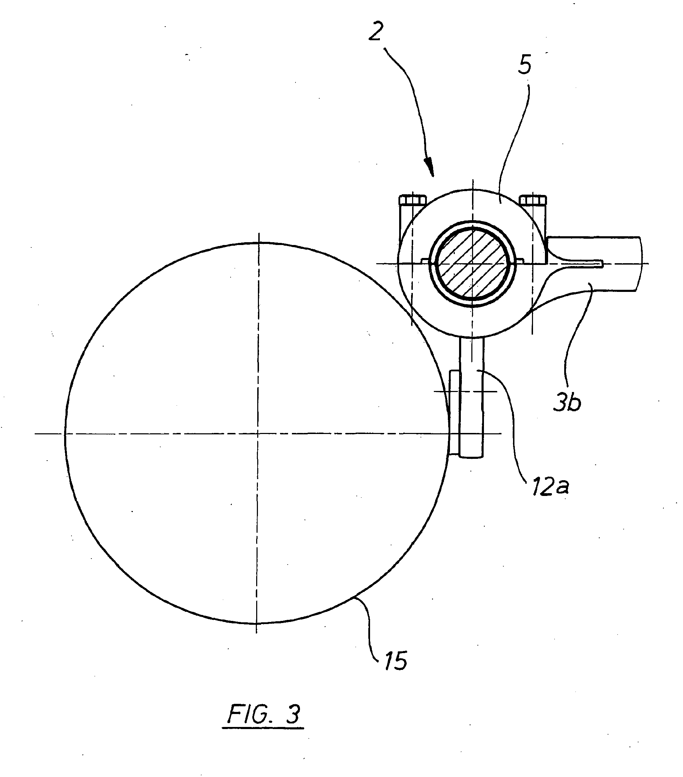

Damit ergibt sich nach Fig. 2 und Fig. 3 eine Montagemöglichkeit des Zentralgelenklagers 2 an einem Achskörper 15, welche zu einer Höhenreduzierung der Anordnung führt. Die Anbindung des Zentralgelenklagers 2 am Achskörper 15 erfolgt in der Anordnung nach Fig. 2 oben mit horizontal ausgerichteten Pratzenverlängerungen 12a, 12b. Damit liegt das Aufnahmeauge 5 des Zentralgelenklagers 2 weitgehend versetzt und neben dem Achskörper 15. Gegenüber der strichliert eingezeichneten Anordnung nach dem Stand der Technik mit einem zusätzlichen Lagerbock auf dem Achskörper ergibt sich ersichtlich eine Reduzierung 17 der Aufbauhöhe.

Nach Fig. 3 lässt sich noch weiter Bauhöhe reduzieren, wenn das Zentralgelenklager 2 mit dem U-förmigen Lagerinnenteil bzw. mit vertikal ausgerichteten Pratzenverlängerungen 12a, 12b seitlich am Achskörper 15 befestigt ist.

Für weitere Anpassungsmöglichkeiten an unterschiedliche achsseitige Lagerstellen können die Pratzenverlängerungen abgewinkelt, verdreht oder gebogen sein.

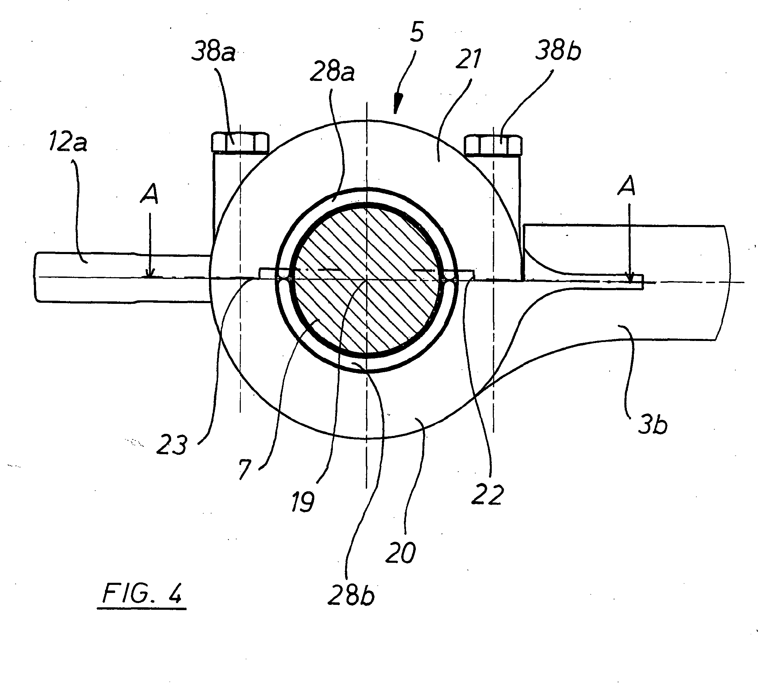

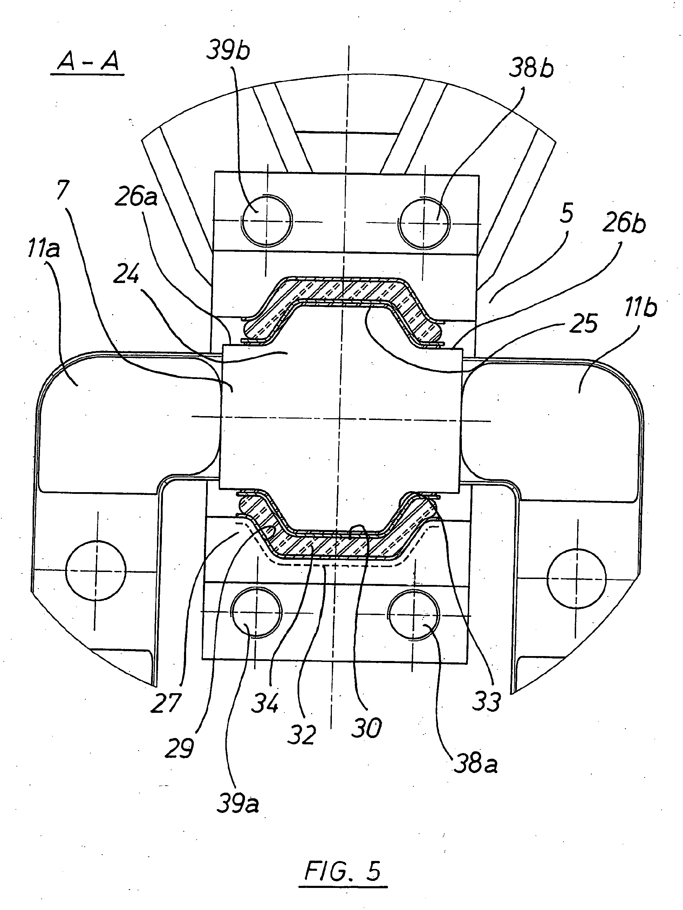

In den Fig. 4 und 5 ist der Aufbau des Zentralgelenklagers 2 im Einzelnen dargestellt, wobei Fig. 5 einen Schnitt entlang der Linie A-A zeigt:
An den Enden der Lenkerschenkel 3a, 3b ist in einem rechten Winkel zur Lagerachse 19 ein unteres Basisschalenteil 20 fest angebracht. Darüber ist eine Deckelschale 21 mittels einer Stufenstruktur 22 an den Anlageflächen 23 formschlüssig aufgesetzt und mittels vier Spannschrauben 38a, 38b, 39a, 39b verschraubt. Die Verschraubung erfolgt in Gewindebohrungen (sh. Fig. 5) an den Anlageflächen des Basisschalenteils 20. Das Basisschalenteil 20 und die Deckelschale 21 bilden im geschlossenen und verspannten Zustand das Aufnahmeauge 5.

Das Lagerinnenteil 7 ist im Bereich des Aufnahmeauges 5 ballig ausgeführt und mit den Pratzenzapfen 11 a, 11 b aus dem Aufnahmeauge 5 herausgeführt. Konkret ist hier der ballige Bereich durch eine Doppelkonusform 24 gebildet, die sich aus einer mittleren Zylinderform 25 ergibt, welche sich zu beiden Seiten zu seitlichen Zylinderformen 26a, 26b verjüngt.

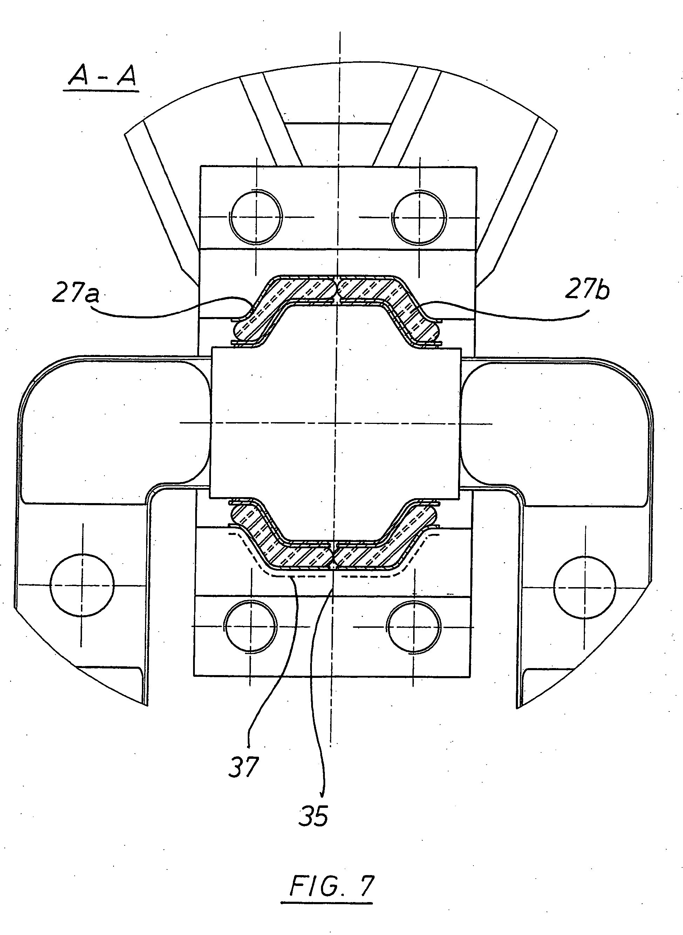

Das Aufnahmeschalenteil 20 und die Deckelschale 21 haben im geschlossenen Zustand etwa eine Innenkontur entsprechend einer Negativform der Doppelkonusform 24 des Lagerinnenteils 7, wobei zwischen den Schalenteilen 20, 21 und dem Lagerinnenteil 7 ein Aufnahmespaltraum für einen zweiteiligen, vorgespannten Elastomerkörper 27 ausgebildet ist. Der Elastomerkörper ist hier axial in zwei Elastomerkörper-Schalenteile 28a, 28b geteilt (sh. Fig. 7), die in Radialrichtung vor dem Zusammenspannen in den Bereich des Aufnahmespaltraums eingelegt werden.

Die Elastomerkörper-Schalenteile 28a und 28b haben durchgehend etwa die gleiche Wandstärke und übergreifen den Doppelkonusbereich. Die Wände sind jeweils aus einer zwischen Blechschalenteilen 29 und 30 einvulkanisierten Elastomerschicht 31 gebildet. Auf der lagerinneren Seite der lagerinneren Blechschale 30 ist zudem ein Elastomerfilm 31 aufgebracht. Die Wandstärke der Elastomerkörper-Schalenteile 28a, 28b ist im nicht vorgespannten Zustand größer als die Spaltbreite des Aufnahmespaltraums und wird durch Aufbringung der radialen Vorspannung verkleinert. Die Ausgangsstellung und die Wandstärke vor dem Zusammenspannen ist mit der strichlierten Linie 32 in Fig. 5 eingezeichnet.

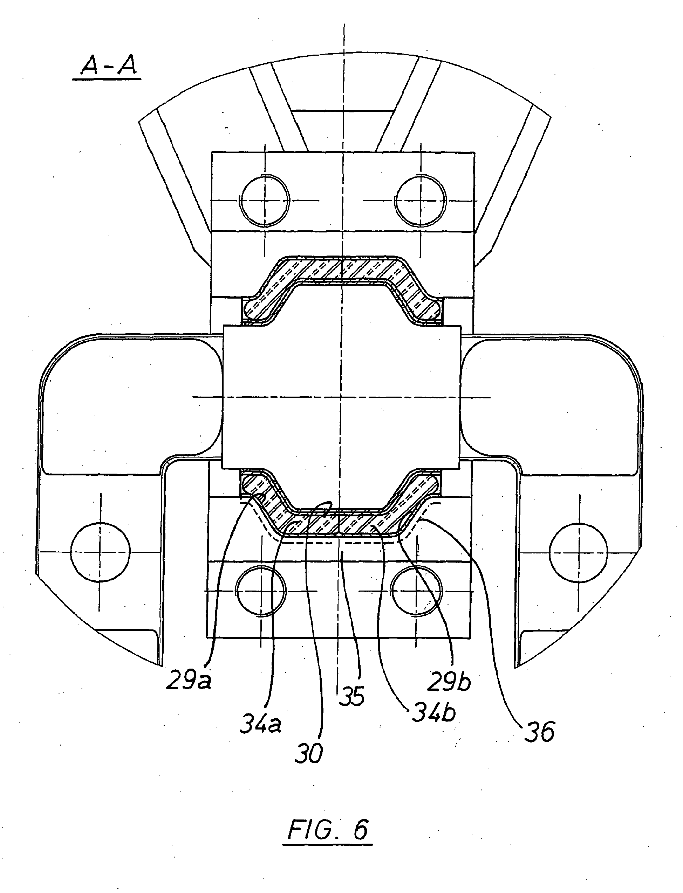

In den Fig. 6 und 7 sind Ausführungsformen gezeigt, die der in Fig. 5 weitgehend entsprechen und sich lediglich hinsichtlich der Ausbildung der Elastomerkörper-Schalenteile unterscheiden, so dass in diesen Figuren nur diese Teile weiter beschrieben sind:
In Fig. 6 sind ebenfalls zwei Elastomerkörper-Schalenteile wie in Fig. 5 verwendet, wobei das lagerinnere Blechschalenteil 30 wie in Fig. 5 ausgeführt ist. Das lageräußere Blechschalenteil 29 und die Elastomerschicht 34 sind dagegen im nicht vorgespannten Zustand jeweils durch einen radialen mittleren Spalt 35 (angedeutet in der strichlierten Linie 36) in Blechschalenteile 29a, 29b und Elastomerschichtbereiche 34a, 34b geteilt, welche jedoch durch das lagerinnenseitige Blechschalenteil 30 zusammenhängen. Aus Fig. 6, die den vorgespannten Zustand zeigt, ist ersichtlich, dass nach der Endmontage zumindest der Spalt 35 in der Elastomerschicht 34 geschlossen ist.

In einer weiteren Ausführungsform nach Fig. 7 ist im Vergleich zu Fig. 6 auch noch das lagerinnere Blechschalenteil radial geteilt, so dass im Herstellzustand insgesamt vier separate Elastomerkörperteile 27a, 27b (28a, 28b nicht gezeigt) vorliegen. Auch hier ist der Herstellzustand mit einer strichlierten Linie 37 eingezeichnet, woraus ein Spalt 35 im nicht vorgespannten Zustand ersichtlich ist. Auch hier ist der Spalt 35 nach dem Vorspannen weitgehend geschlossen. Zusätzlich zu einer radialen Vorspannung eine axiale Vorspannung ergibt sich in den Ausführungsformen der Fig. 5 und Fig. 6 eine axiale Vorspannung im Elastomerkörper 27.

Der dargestellte Dreieckslenker 1 kann komplett, wie in Fig. 1 dargestellt, vormontiert und ausgeliefert werden. Um die Montage im Fahrzeug zu vereinfachen ist es möglich, dem Lagerinnenteil 7 bzw. den U-Schenkeln eine Vorwinkelung zu geben. In einer weiteren Montagevariante kann der Dreieckslenker 1 mit den aufbauseitigen Gelenklagern 4a, 4b vormontiert ausgeliefert werden, wobei die Deckelschale und die Elastomerkörperteile 27 des Zentralgelenklagers 2 als Losteile mitgeliefert werden. Achsseitig sind dann die Anschlusspratzen 10a, 10b am Achskörper vorzumontieren und danach bei eingelegten Elastomerkörperteilen die Deckelschale 21 zu verschrauben.

## Patentansprüche

1. Elastomer-Metall-Gelenklager, insbesondere als Zentralgelenk an einem Dreieckslenker einer Achslagerung,
mit einem metallischen Aufnahmeauge (5) als erstem Lagerteil,
mit einem Lagerinnenteil (7) als zweitem Lagerteil, das in das Aufnahmeauge (5) eingesetzt ist und das im Bereich des Aufnahmeauges (5) um eine Lagerachse (19) rotationssymmetrisch ballig (25) ausgebildet ist,
mit einem vorgespannten Elastomerkörper (27) zwischen dem Lagerinnenteil (7) und dem Aufnahmeauge (5), wobei der Elastomerkörper (27) mehrteilig ausgebildet ist und den balligen Bereich (25) des Lagerinnenteils (7) übergreift,
**dadurch gekennzeichnet,**
**dass** das Aufnahmeauge (5) in einer Axialebene in zwei Aufnahmeschalenteile (20, 21) längsgeteilt ist, dergestalt,
**dass** ein Aufnahmeschalenteil als Basisschalenteil (20) mit der ersten Lagerstelle (3a, 3b) unmittelbar oder mittelbar verbunden ist und das andere Aufnahmeschalenteil als abnehmbare Deckelschale (21) über Spannschrauben (38a, 38b, 39a, 39b) mit der Basisschale (20) unter Aufbringung der Vorspannung im Elastomerkörper (27) verbunden ist, und
**dass** die Aufnahmeschalenteile (20, 21) im geschlossenen Zustand etwa eine Innenkontur entsprechend einer Negativform der Form (24) des Lagerinnenteils (7) aufweisen, wobei zwischen den Aufnahmeschalenteilen (20, 21) und dem Lagerinnenteil (7) ein Aufnahmespaltraum für den mehrteiligen, vorgespannten Elastomerkörper (27) ausgebildet ist.

2. Elastomer-Metall-Gelenklager nach Anspruch 1, **dadurch gekennzeichnet, dass** die mehreren Teile des Elastomerkörpers (27) als Elastomer-Metall-Körperschalenteile zusammengesetzt einen an die Form des Lagerinnenteils (7) angepassten, den balligen Bereich (24) einschließenden Raumkörper mit Wänden etwa gleicher Wandstärke bilden, und
dass diese Wände jeweils aus einer zwischen Blechschalenteilen (29, 30) einvulkanisierten Elastomerschicht (34) bestehen, wobei die Wandstärke im nicht vorgespannten Zustand größer als die Spaltbreite des Aufnahmespaltraums ist.

3. Elastomer-Metall-Gelenklager nach Anspruch 2, **dadurch gekennzeichnet, dass** zumindest teilweise auf den der Elastomerschicht (34) abgewandten Seiten der Blechschalenteile (29, 30), insbesondere auf den lagerinneren Blechschalenteilen (29) ein Elastomerfilm (31) angebracht ist.

4. Elastomer-Metall-Gelenklager nach einem der Ansprüche 1 bis 3, **dadurch gekennzeichnet, dass** der mehrteilige Elastomerkörper (27) radial und/oder axial geteilt ist.

5. Elastomer-Metall-Gelenklager nach Anspruch 4, **dadurch gekennzeichnet, dass** ein Elastomerkörper (27), vorzugsweise als Gummi-Metall-Körper mit lagerinneren und lageräußeren Blechschalenteilen (29, 30) und dazwischen einvulkanisierter Elastomerschicht (34) insgesamt axial in zwei Elastomerkörperschalenteile (28a, 28b) geteilt ist und im vorgespannten Zustand eine im Wesentlichen radiale Vorspannung in der Elastomerschicht (34) aufgebracht ist.

6. Elastomer-Metall-Gelenklager nach Anspruch 4, **dadurch gekennzeichnet, dass** ein Elastomerkörper (27) mit lagerinneren und lageräußeren Blechschalenteilen (29, 30) radial in zwei Elastomerkörperschalenteile (28a, 28b) geteilt ist und die Elastomerschicht (34) jedes Elastoberkörperschalenteils (28a, 28b) und das lageräußere Blechschalenteil (30) im nicht vorgespannten Zustand jeweils durch einen radialen mittleren Spalt (35) voneinander beabstandet sind, wobei wenigstens der Spalt in der Elastomerschicht (34) im vorgespannten Zustand durch eine aufgebrachte radiale und axiale Vorspannung geschlossen ist.

7. Elastomer-Metall-Gelenklager nach Anspruch 4, **dadurch gekennzeichnet, dass** der Elastomerkörper (27) mit lagerinneren und lageräußeren Blechschalenteilen (29, 30) insgesamt axial und radial in vier Elastomerkörperschalenteile (27a, 27b) geteilt ist, die im montierten und vorgespannten Zustand durch eine aufgebrachte radiale und axiale Vorspannung mit ihren benachbarten Rändern weitgehend zusammengeführt sind.

8. Elastomer-Metall-Gelenklager nach einem der Ansprüche 1 bis 7, **dadurch gekennzeichnet, dass** der ballige Bereich des Lagerinnenteils (7) kugelförmig ausgebildet ist.

9. Elastomer-Metall-Gelenklager nach einem der Ansprüche 1 bis 7, **dadurch gekennzeichnet, dass** der ballige Bereich des Lagerinnenteils (7) durch eine mittlere Zylinderform (25) gebildet ist, die sich nach beiden Seiten zu seitlichen Zylinderformen (26a, 26b) verjüngt und eine Doppelkonusform (24) bildet, wobei durch den Elastomerkörper (27) die Doppelkonusform (24) mit jeweils einem Teil der seitlichen Zylinderformen (26a, 26b) umfasst ist.

10. Elastomer-Metall-Gelenklager nach einem der Ansprüche 1 bis 9, **dadurch gekennzeichnet,**
**dass** die Basisschale (20) und die Deckelschale (21) dickwandig, in der Außenform als Halbkreis-Halbschalen ausgebildet sind,
**dass** sie über eine gegenseitig zugeordnete Anlagestruktur, vorzugsweise jeweils über eine Längsstufe (22), formschlüssig an Anlageflächen (23) aneinander liegen, und
**dass** die Spannschrauben (38a, 38b, 39a, 39b) etwa senkrecht durch die Anlageflächen (23) geführt sind, wobei dazu vorzugsweise an den Anlageflächen (23) der Achslenkerschale (20) Gewindebohrungen eingebracht sind.

11. Elastomer-Metall-Gelenklager nach einem der Ansprüche 1 bis 10, **dadurch gekennzeichnet, dass** das Lagerinnenteil (7) eine axiale Durchgangsbohrung zur Aufnahme einer Anschlussschraube aufweist oder mit wenigstens einem Konuszapfen und/oder wenigstens einer Anschlusspratze mit wenigstens einer Schraubenbohrung aus dem Bereich des Aufnahmeauges (5) vorsteht.

12. Elastomer-Metall-Gelenklager nach Anspruch 11, **dadurch gekennzeichnet, dass** die wenigstens eine Anschlusspratze (10a, 10b) aus einem aus dem Aufnahmeauge (5) vorstehenden Pratzenzapfen (11 a, 11 b) und wenigstens einer daran anschließenden und Bohrungen (13a, 13b, 14a, 14b) für Anschlussschrauben enthaltenden Pratzenverlängerung (12a, 12b) besteht, welche zu Anpasszwecken gegenüber der Pratzenzapfenrichtung abgewinkelt und/oder verdreht und/oder gebogen ist.

13. Achslenkerlager nach Anspruch 11 oder 12, **dadurch gekennzeichnet, dass** die Pratzenverlängerung (12a, 12b) mit etwa einem Rechteckquerschnitt für eine flächige Anlage an der zugeordneten Lagerstelle ausgebildet ist.

14. Achslenkerlager nach einem der Ansprüche 11 bis 13, **dadurch gekennzeichnet, dass** durch am Aufnahmeauge (5) gegenüberliegende Pratzenzapfen (11 a, 11 b) und zugeordnete Pratzenverlängerungen (12a, 12b) als U-Schenkel ein U-förmiges Lagerinnenteil (7) gebildet ist und vorzugsweise jeweils in einer Pratzenverlängerung (12a, 12b) zwei beabstandete und gegenüber dem Aufnahmeauge (5) versetzt liegende Bohrungen (13a, 13b, 14a, 14b) für Anschlussschrauben angebracht sind.

15. Achslenkerlager nach Anspruch 14, **dadurch gekennzeichnet, dass** das U-förmige Lagerinnenteil (7) ein Bestandteil eines Zentralgelenklagers (2) eines Dreieckslenkers (1) ist und die Pratzenverlängerungen (12a, 12b) mit einem Versatz zum Aufnahmeauge (5) an einem zylindrischen Achskörper (15) vorzugsweise oben horizontal oder seitlich vertikal angeschraubt sind.
